(19) **Europäisches Patentamt European Patent Office Office européen des brevets**

(11) **EP 4 730 810 A1**

(12) **EUROPEAN PATENT APPLICATION**

(43) Date of publication:
22.04.2026 Bulletin 2026/17

(21) Application number: 24306724.6

(22) Date of filing: 17.10.2024

(51) International Patent Classification (IPC):
*H04N 19/86* (2014.01)     *H04N 19/63* (2014.01)

(52) Cooperative Patent Classification (CPC):
H04N 19/63; H04N 19/86

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **LE MEUR, Olivier 35160 TALENSAC (FR)**
• **DAMODARAN, Bharath Bhushan 56000 VANNES (FR)**
• **SCHNITZLER, Francois 56890 SAINT AVE (FR)**
• **LAMBERT, Anne 35250 SAINT-AUBIN-D'AUBIGNE (FR)**

(74) Representative: **Interdigital Immeuble ZEN 2 845 A, avenue des Champs Blancs 35510 Cesson-Sévigné (FR)**

(54) **METHOD AND DEVICE FOR IMAGE DECODING USING INVERTIBLE NEURAL NETWORK BASED ON SUBBAND DECOMPOSITION**

(57)     A method and device propose to enhance an image by performing by a backward pass of an INN based on wavelet transforms of the luminance of the image. The INN is trained on a plurality of images to minimize a set of losses: a forward loss for minimizing the energy in wavelet subbands output by the INN in forward pass, at least a first backward loss for minimizing the difference between the reconstructed luminance and the luminance of the input image and optionally a second backward loss for minimizing the difference between the wavelet subbands reconstructed by the INN in a backward pass and the wavelet subbands of the luminance of the input image.

Figure 6

**Description**

TECHNICAL FIELD

At least one of the present embodiments generally relates to a method and a device for decoding images and particularly to enhance a decoded image using an invertible neural network based on subband decomposition such as wavelet transforms.

BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors or prediction residuals, are transformed, quantized and entropy coded. During encoding the original image block is usually partitioned/split into sub-blocks for example using quad-tree partitioning. To reconstruct the video, the compressed data is decoded by inverse processes corresponding to the prediction, transform, quantization and entropy coding.

SUMMARY

A first aspect of at least one embodiment is directed to a method comprising decoding an image from an obtained encoded video data, separating the decoded image in luminance and chrominance, decomposing the luminance of the decoded image by applying a transform to the luminance of the decoded image to determine a first set of wavelet subbands, determining a second set of wavelet subbands by generating a set of wavelet subbands following a known distribution, reconstructing a third set of wavelet subbands representing a reconstructed luminance by performing a backward pass on an invertible neural network having for input the second set of wavelet subbands and being conditioned by the first set of wavelet subbands, determining the reconstructed luminance by applying an inverse transform to the third set of wavelet subbands, combining the reconstructed luminance and the chrominance of the decoded image into an output image, and providing the output image, wherein the invertible neural network is trained to minimize a set of losses.

A second aspect of at least one embodiment is directed to a method for training an invertible neural network, the method comprising, for a set of images, iterating until a pre-determined number of iteration occurred or until a loss value does not change anymore, and for each iteration, determining a set of losses based on the iterated image, updating the parameters by using gradient backpropagation, wherein the set of losses comprise at least a forward loss for minimizing the energy of a set of wavelet subbands reconstructed by the invertible neural network in a forward pass, and a backward loss for minimizing the difference in a backward pass between the second set of wavelet subbands and wavelet subbands obtained by applying a transform to a luminance of an input image to which the decoded image corresponds to, and wherein the impact of each loss is balanced using a weight.

A third aspect of at least one embodiment is directed to an apparatus comprising an image decoder configured to decode an image from an obtained encoded video data, one or more processor configured to separate the decoded image in luminance and chrominance, decomposing the luminance of the decoded image by applying a transform to the luminance of the decoded image to determine a first set of wavelet subbands, determine a second set of wavelet subbands by generating a set of wavelet subbands following a known distribution, determine the reconstructed luminance by applying an inverse transform to a set of wavelet subbands provided by an invertible neural network, combining the reconstructed luminance and the chrominance of the decoded image into an output image, and providing the output image, an invertible neural network configured to reconstruct a third set of wavelet subbands representing a reconstructed luminance by performing a backward pass on an invertible neural network having for input the second set of wavelet subbands and being conditioned by the first set of wavelet subbands.

One or more of the present embodiments also provide a computer readable storage medium having stored thereon instructions for performing at least part of any of the method described above. One or more embodiments also provide a computer program product including instructions for performing at least part of any of the method described above.

BRIEF SUMMARY OF THE DRAWINGS

Figure 1 illustrates a block diagram of an example of a system in which various aspects and embodiments are implemented.

Figure 2 describes an example of a context in which following embodiments can be implemented.

Figure 3 illustrates a block diagram of an example of video encoder.

Figure 4 illustrates a block diagram of an example of video decoder.

Figure 5A illustrates the principles of Invertible Neural Networks (INN).

Figure 5B illustrates three examples of architecture relying on coupling layers, from top to bottom: scaling, translation and single side affine transform.

Figure 5C illustrates an example of architecture of an invertible neural network based on wavelet transforms according to embodiments.

Figure 6 illustrates an example of process for training an invertible neural network based on wavelet transforms according to embodiments.

Figure 7 illustrates an example of process for operating an invertible neural network based on wavelet transforms according to embodiments.

Figure 8 illustrates an example of process for training invertible neural network using wavelet subbands according to embodiments.

Figure 9 illustrates an example of process for utilizing an invertible neural network using wavelet subbands for enhancing images according to embodiments.

DETAILED DESCRIPTION

The present aspects, although describing principles in the context of VVC (Versatile Video Coding) or HEVC (High Efficiency Video Coding) specifications, are not limited to these video coding standards, and can be applied, for example, to other standards and recommendations and extensions of any such standards and recommendations (including VVC and HEVC). Unless indicated otherwise, or technically precluded, the aspects described in this application can be used individually or in combination.

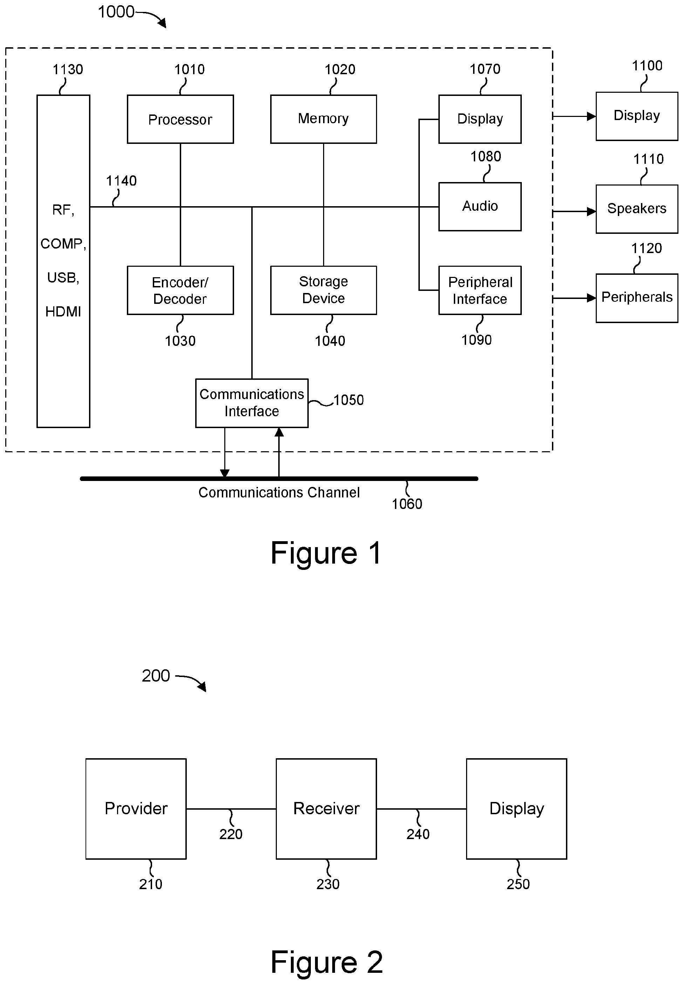

**Figure 1** illustrates a block diagram of an example of a system in which various aspects and embodiments are implemented. System 1000 can be embodied as a device or apparatus including the various components described below and is configured to perform one or more of the aspects described in this document. Examples of such devices include, but are not limited to, various electronic devices such as computers, smartphones, tablets, digital multimedia set top boxes, digital television receivers, personal video recording systems, connected home appliances, vehicle entertainment systems, vehicle control systems, drones, video surveillance cameras, and more generally data servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. The processor 1010 may be any type of electronic circuitry such as a general-purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Array (FPGAs) circuits, an integrated circuit (IC), a state machine, and the like. The processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash-based memory, magnetic disk drive, solid-state drive (SSD), and/or optical disk drive. The storage device 1040 can include an internal storage device, an attached storage device (including detachable and non-detachable storage devices), and/or a network accessible storage device (a.k.a. cloud storage), as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions described further below. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform one or more of the aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265), or VVC (Versatile Video Coding, also known as H.266).

The input to the elements of system 1000 can be provided through various input devices as indicated in block 1130. Such input devices include, but are not limited to, a radio frequency (RF) portion that receives an RF signal transmitted, for example, over the air by a broadcaster, a Component (COMP) input terminal (or a set of COMP input terminals), a Universal Serial Bus (USB) input terminal, and/or a High-Definition Multimedia Interface (HDMI) input terminal. Other examples include composite video.

In various embodiments, the input devices of block 1130 have associated respective input processing elements as known in the art. For example, the RF portion can be associated with elements suitable for selecting a desired frequency (also referred to as selecting a signal, or band-limiting a signal to a band of frequencies), down converting the selected signal, band-limiting again to a narrower band of frequencies to select (for example) a signal frequency band which can be referred to as a channel in certain embodiments, demodulating the down converted and band-limited signal, performing error correction, and demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down converting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, down converting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna. The RF portion may comply with standard specifications such as those published by Digital Video Broadcasting (DVB), Advanced Television Systems Committee (ATSC), Association of Radio Industries and Businesses (ARIB) or others.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the data stream as necessary for presentation on an output device.

Various elements of system 1000 can be provided within an integrated housing, Within the integrated housing, the various elements can be interconnected and transmit data therebetween using suitable connection arrangement 1140, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other devices. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

**Figure 2** describes an example of a context in which following embodiments can be implemented. In this context 200, a system 210 transmits a video stream to a system 230 using a communication channel 220. Examples of system 210 comprise a camera, a storage device, a computer, a drone, a video surveillance camera, a server or any device capable of delivering a video stream. The video stream is either encoded and transmitted by the system 210 or received and/or stored by the system 210 and then transmitted. The communication channel 220 is a wired (for example Internet, Ethernet, Cable network) or a wireless (for example WiFi, 3G, 4G or 5G, satellite TV, terrestrial TV) network link. The system 230 receives and decodes the video stream to generate a sequence of decoded pictures. An example of system 230 is a set top box. The obtained sequence of decoded pictures is then transmitted to a display system 250 using a communication channel 240, that could be a wired or wireless network as introduced above. The display system 250 then displays said pictures. An example of display system 250 is a television or display monitor.

In an embodiment, the system 230 and the display system 250 are comprised in a single device, thus combining the reception, decoding and display of the video stream. Examples of such device are a television, a computer, a tablet, a smartphone, a head-mounted display, a vehicle entertainment system, a medical device.

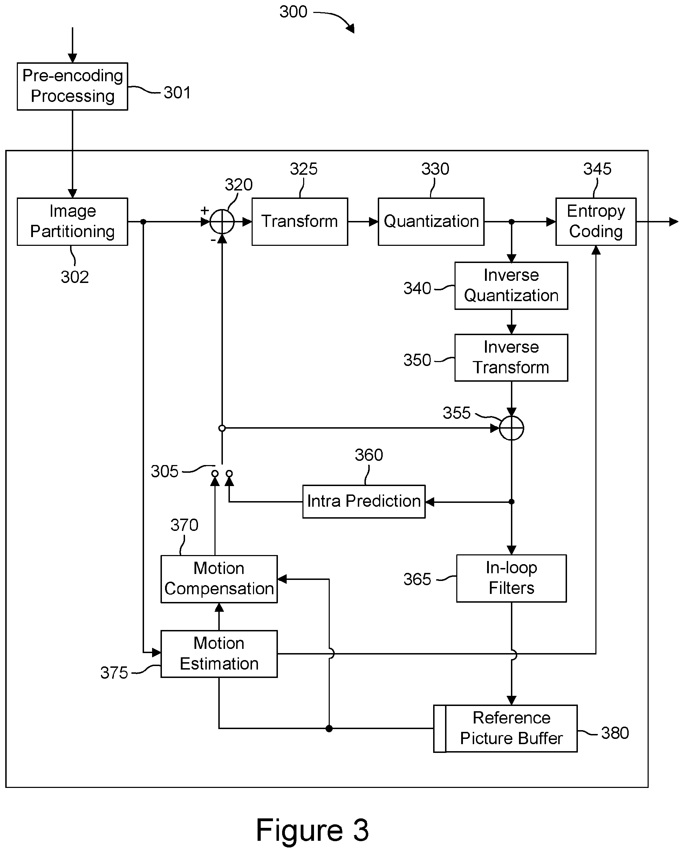

**Figure 3** illustrates a block diagram of an example of video encoder. Variations of this encoder 300 are contemplated, but the encoder 300 is described below for purposes of clarity without describing all expected variations. Before being encoded, the video sequence may go through pre-encoding processing 301, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream, for example in the form of supplemental enhancement information (SEI) messages, for the standards that include such mechanism.

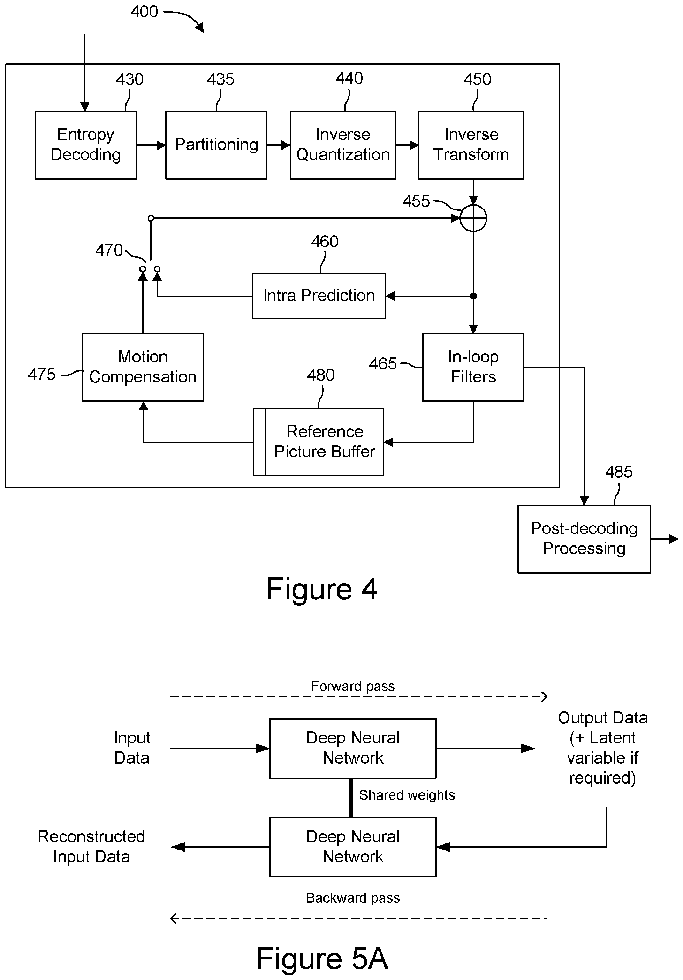

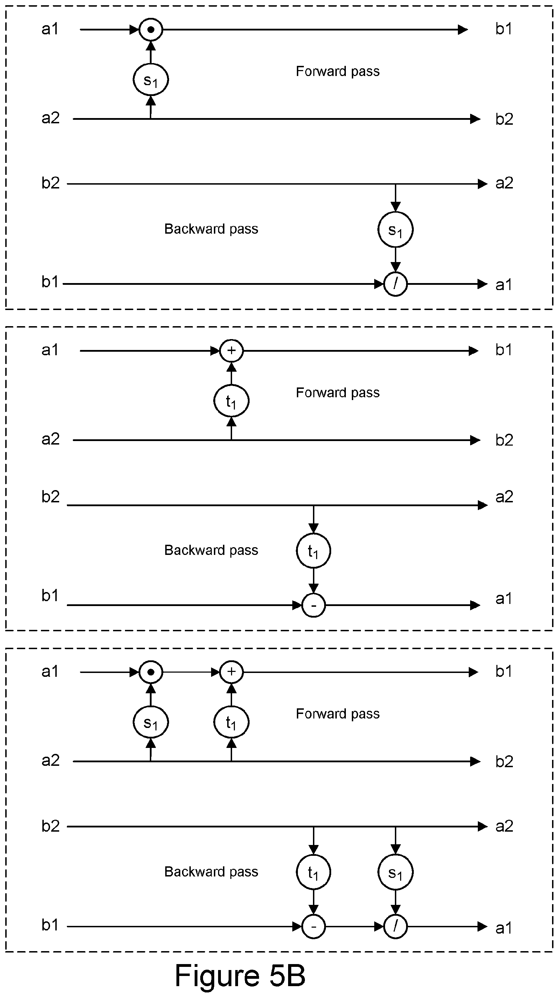

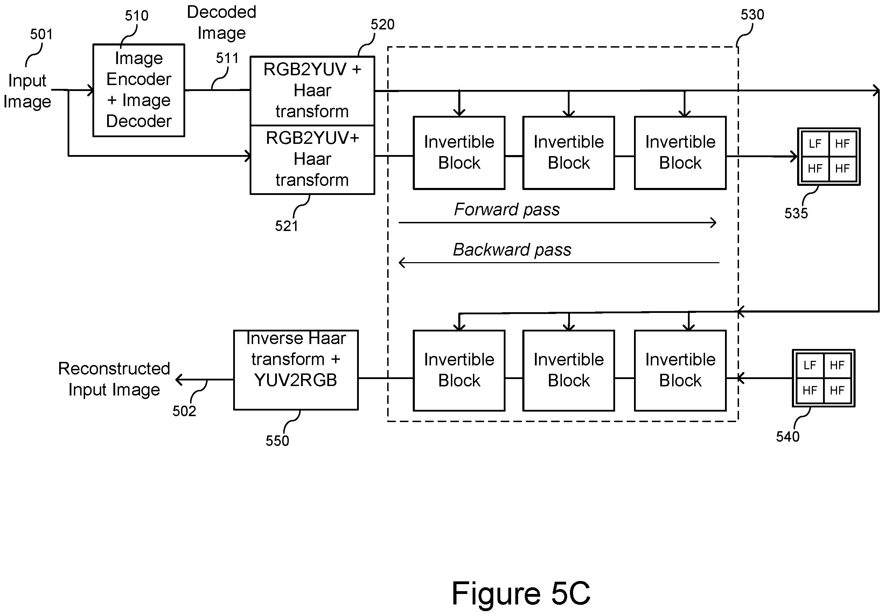

In the encoder, a picture is encoded by the encoder elements as described below. The picture to be encoded is partitioned (302), for example as further described in figure 5, and processed in units such as coding units. Each unit is encoded using, for example, either an intra or inter mode. When a unit is encoded in an intra mode, it performs intra prediction (360). In an inter mode, motion estimation (375) and compensation (370) are performed. The encoder decides (305) which one of the intra mode or inter mode to use for encoding the unit, and indicates the intra/inter decision by, for example, a prediction mode flag. Prediction residuals are calculated, for example, by subtracting (320) the predicted block from the original image block. The prediction residuals are then transformed (325) and quantized (330). The quantized transform coefficients, as well as motion vectors and other syntax elements, are entropy coded (345) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (340) and inverse transformed (350) to decode prediction residuals. Combining (355) the decoded prediction residuals and the predicted block, an image block is reconstructed. In-loop filters (365) are applied to the reconstructed picture to perform, for example, deblocking/SAO (Sample Adaptive Offset), Adaptive Loop-Filter (ALF) filtering to reduce encoding artifacts. The filtered image is stored at a reference picture buffer (380) for further use.

The encoder also generally performs video decoding as part of encoding video data.

**Figure 4** illustrates a block diagram of an example of video decoder. In the decoder 400, a bitstream is decoded by the decoder elements as described below. Video decoder 400 generally performs a decoding pass reciprocal to the encoding pass as described in previous figure. The input of the decoder includes a video bitstream, which can be generated by video encoder 300 of figure 3. The bitstream is first entropy decoded (430) to obtain transform coefficients, motion vectors, and other coded information. The picture partition information indicates how the picture is partitioned. The decoder may therefore divide (435) the picture according to the decoded picture partitioning information. The transform coefficients are de-quantized (440) and inverse transformed (450) to decode the prediction residuals. Combining (455) the decoded prediction residuals and the predicted block, an image block is reconstructed. The predicted block can be obtained (470) from intra prediction (460) or motion-compensated prediction (i.e., inter prediction) (475). In-loop filters (465) are applied to the reconstructed image. The filtered image is stored at a reference picture buffer (480).

The decoded picture can further go through post-decoding processing (485), for example, an inverse color transform (e.g., conversion from YCbCr 4:2:0 to RGB 4:4:4) or an inverse remapping performing the inverse of the remapping process performed in the pre-encoding processing (301 of figure 3). The post-decoding processing can use metadata derived in the pre-encoding processing and signaled in the bitstream.

**Figure 5A** illustrates the principles of Invertible Neural Networks (INN). Invertible Neural Networks (INN) are deep neural networks based on invertible and differential modules that define a bijective mapping between input and output data. When the output distribution is explicitly known, such as a normal distribution, normalizing flows can be used to transform the simple output distribution into the more complex input distribution by applying a sequence of invertible transformation functions. The exact log-likelihood of the input data is then tractable and can be used as training criterion. However, when the output distribution is not arbitrarily known, the parameters of invertible neural network can still be trained thanks to carefully designed loss functions. This is the case in several new applications such as invertible image decolorization, invertible image rescaling, invertible image steganography and invertible denoising. As the bijective mapping is the key ingredient of INN, it is often necessary to consider additional latent variables when the inverse problem is ambiguous.

The forward pass of an INN is the transformation of the input data to output data with latent variable if required (to ensure that the mapping performed by the neural network is bijective). The backward pass relies on the output data with latent variable if required to reconstruct the input data.

The forward and backward passes use exactly the same trainable parameters. The underlying architecture is however adapted to be invertible. Figure 5B illustrates three examples of architecture relying on coupling layers, from top to bottom: scaling, translation and single side affine transform.

The equations below are using the conventional notation where $a_{\square}$ is an input and $b_{\square}$ an output. The input $a_{\square}$ first undergoes a splitting operation providing two parts $[a_1, a_2]$. They are transformed as given in Table 1.

Table 1

| | Forward pass | Backward pass |
|---|---|---|
| Translation transform | $b_1 = a_1 + t_1(a_2)$ <br> $b_2 = a_2$ | $a_1 = b_1 - t_1(b_2)$ <br> $a_2 = b_2$ |
| Scaling transform | $b_1 = a_1 \odot \exp(s_1(a_2))$ <br> $b_2 = a_2$ | $a_1 = b_1 \oslash \exp(s_1(b_2))$ <br> $a_2 = b_2$ |
| | | |
| Single side affine transform | $b_1 = a_1 \odot \exp(s_1(a_2)) + t_1(a_2)$ <br> $b_2 = a_2$ | $a_1 = (b_1 - t_1(b_2)) \oslash \exp(s_1(b_2))$ <br> $a_2 = b_2$ |

where $\odot$ represents the element-wise multiplication and $\oslash$ represents the element-wise division, $t_j$ and $s_j$ are corresponding respectively to the scale and shift (transform) coefficients of an arbitrary network. A five-layer densely connected convolutional block is commonly used to learn the two coefficients independently (as defined in [Huang et al., 2017]). The same scale and shift coefficients $t_j$ and $s_j$ are used both for the forward pass and for the backward pass.

When dealing with single side coupling layers as those illustrated in Figure 5B, it is recommended to adapt the splitting operation when stacking coupling layers. Note that there also exists double-side affine transformation.

Embodiments described herein propose an image enhancement process for improving the quality of an image by a decoder receiving an encoded image. The embodiments are based on an INN based on subband decomposition, for example using wavelet transforms. The description hereafter describes a subband decomposition based on wavelet transforms, such as the Haar transform. However, embodiments may use other type of subband decompositions such as Mexican hat wavelet, Daubechies wavelet, triangular wavelet. The INN is trained on a set of input images and decoded versions of encoded versions of the input images. The image enhancement process is only based on a decoded image, for example as decoded by a decoder 400 of figure 4: no side information is required to operate the image enhancement process and no specific data need to be conveyed for this process. This last point is extremely important since it is important not to increase the bit rate, i.e. adding data to the bitstream. This comes at the cost of an increased complexity at the decoder side but could allow to differentiate a 'base' decoder from a more 'high-end' decoder that provides better images based on the same input data. This image enhancement process may be implemented in the post-decoding processing (485 of figure 4) module of a decoder (400 of figure 4). The image enhancement is performed by a backward pass of an INN using wavelet transforms. The INN is trained on a plurality of images to minimize a set of losses: a forward loss for minimizing the energy in wavelet subbands output by the INN in forward pass, a first backward loss for minimizing the difference between the wavelet subbands reconstructed by the INN in a backward pass and the wavelet subbands of the input image and a second backward loss for minimizing the difference between the reconstructed luminance and the luminance of the input image.

**Figure 5C** illustrates an example of architecture of an invertible neural network based on wavelet transforms according to embodiments. The INN 530 itself is based on a plurality of invertible blocks used in a forward and backward pass. The input image $I$ 501 is first encoded and decoded by an image encoder and image decoder 510 that generates a decoded image $\hat{I}$ 511. This decoded image is the result of the use of a video coding system and may include some imperfections that the proposed system aims to correct or at least partially reduce. Any image encoder and decoder may be used, for example based on VVC, HEVC or other video coding systems. The luminance of the decoded image and of the input image are extracted and decomposed into wavelet transforms. An Haar wavelet transform may be used to separate the low and the high frequencies of the luminance signals. In at least one embodiment, only one level of decomposition is used, operating on the luminance channel ($Y$) only. Other embodiments may use more than one level of decomposition and/or operate on all channels. However, operating on the luminance channel makes sense since the fine details, texture information and main structures of the image are mostly present in this channel. Note that more than one level of decomposition could be considered. In addition, it is also possible to consider more than one channel in input of the Haar transform. Considering only one level of decomposition, a set of four wavelet subbands is thus used per image. Such decomposition is represented in the figures by a set of four blocks labeled LF and HF. Let Haar$_I$ and Haar$_{\hat{I}}$ the set of wavelet subbands for the original and decoded image luminance, resulting respectively from the modules 520 and 521. An INN $g_\theta$ 530 takes in input a set of wavelet subbands, and is conditioned by the set of wavelet subbands of the decoded image luminance, i.e. Haar$_{\hat{I}}$. The trainable parameters of the network are grouped into the variable $\theta$. The forward pass of the network is: (Haar$_z$) = $g_\theta$ (Haar$_I$ |Haar$_{\hat{I}}$ ), where Haar$_z$ is a set of wavelet subbands. The idea is to have a zero energy within this set: the mean of each subband should equal to 0 and the standard deviation equal to 1. This means that each subband follows a normal distribution. In other words, the invertible neural network 530 operates on wavelet transforms and is trained to minimize the energy in subbands of the wavelet transform 535 resulting from the forward pass. The backward pass of the network output is: $\left(\widetilde{Haar_I}\right) = g_\theta^{-1}(Haar_z, Haar_{\hat{I}})$, where $\widetilde{Haar_I}$ is the reconstructed set of wavelet subbands for the improved image. In other words, the backward pass is conditioned by the decoded image luminance wavelet transform and operates on a set of wavelet subbands that follows a normal distribution 540 to generate wavelet subbands of a reconstructed image luminance. Using an inverse Haar transform and YUV to RGB conversion 550, the wavelet subbands are transformed into a reconstructed image luminance and combined with the chrominance of the decoded image into a reconstructed output image 502.

The training may be performed on a plurality of original and decoded images. The training may be performed a subset of images for example on patches of size 128x128 pixels. This process may be done offline by a service provider or device manufacturer for the receiver device 230 of figure 2. The parameters of the INN are then integrated into the receiver device 230 so that the INN may be used in a backward pass to improve the quality of a decoded image. In at least one embodiment, the INN is integrated into the post-decoding processing module 485 of a video decoder as illustrated in figure 4.

In embodiments, the wavelet subbands are generated using a Haar transform and the signal is reconstructed from the wavelet subbands using an inverse Haar transform. Other types of transforms may be used such as a Fourier transform. The figures illustrate a set of 4 subbands for the wavelets but any other number of subbands and corresponding level of decomposition may be used, for example any number between 1 and 5 (depending on the resolution of the input images). An implementation based on one decomposition level providing a set of 4 subbands already provided good results with standard definition images, while being reasonable in terms of complexity.

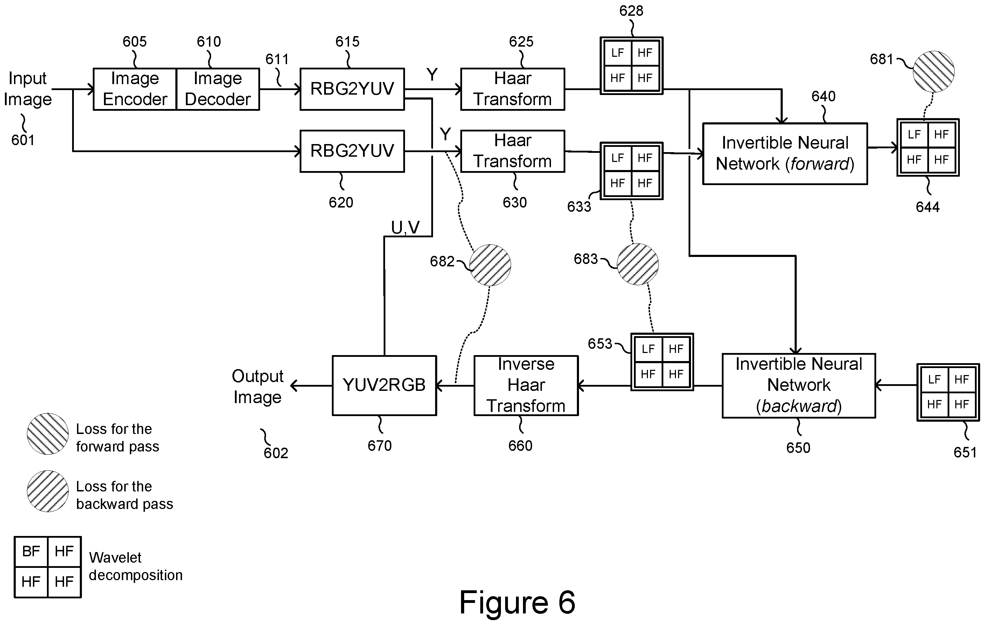

**Figure 6** illustrates an example of process for training an invertible neural network based on wavelet transforms according to embodiments. The input image $I$ 601 of size $N \times M$ is converted 620 to YUV and its luminance is decomposed into wavelet subbands 633 by a Haar transform 630. The input image 601 is also encoded by the image encoder 605 and decoded by the image decoder 610 that generates a decoded image $\hat{I}$ 611. The decoded image 611 is converted 615 to YUV and the luminance (Y) is decomposed into wavelet subbands 628 by a Haar transform 625. The wavelet subbands 628 are used to condition the INN, both in forward and backward passes.

For the forward pass, the invertible network 640, conditioned by the wavelet subbands 628, takes in input the wavelet subbands 633 of the input image. The output of the network $Haar_z$ for the forward pass is a set of wavelet subbands 644 for which each subband follows a known distribution, for example a normal distribution, or has zero energy, according to a forward pass loss $\mathcal{L}_{fwd}$ 681.

In at least one embodiment, the goal of the forward pass loss $\mathcal{L}_{fwd}$ is to force the set of wavelets follows a normal distribution. In other words, the forward pass loss $\mathcal{L}_{fwd}$ is based on a standard normal distribution with mean equal to 0 and variance equal to 1. With $z_i$ defined as being n latent variables, the distribution of $z_i$ is regularized to follow a standard normal distribution with mean equal to 0 and variance equal to 1, by maximizing the log-likelihood of $p(z)$, with $p(.)$ denoting the probability density function of the standard normal distribution. The likelihood function, assuming n values of independent and identically distributed normal random variables $z_i$, is:

$$\mathcal{L}(z_1, \ldots, z_n) = \frac{1}{(2\pi)^{\frac{1}{2}}} \exp\left(-\frac{1}{2}\sum_{i=1}^{n} z_i^2\right)$$

The log-likelihood function regularization of the variables z is defined as:

$$\mathcal{L}_{reg}(z_1, \ldots, z_n) = -\log\left(\frac{1}{(2\pi)^{\frac{n}{2}}} \exp\left(-\frac{1}{2}\sum_{i=1}^{n} z_i^2\right)\right)$$

$$\mathcal{L}_{reg}(z_1, \ldots, z_n) = -\frac{n}{2}\ln(2\pi) - \frac{1}{2}\sum_{i=1}^{n} z_i^2$$

Maximizing the log-likelihood is similar to minimize $\sum_{i=1}^{n} z_i^2$ .

In at least one embodiment, the goal of the forward pass loss $\mathcal{L}_{fwd}$ is to force the wavelet subbands output by the forward pass of the $Haar_z$ INN (535 of figure 5C) to have zero energy, in other words that all wavelet coefficients sum to zeros. Thus, the forward pass loss $\mathcal{L}_{fwd}$ may be determined by:

$$\mathcal{L}_{fwd}(\epsilon_{fwd}) = \frac{1}{M \times N} \sum_{k=\{0,1,2,3\}} \sum_{(x,y)\in(\frac{N}{2},\frac{M}{2})} Haar_z(x,y,k)^p$$

where k is the subband index and p the type of the norm (p=1, norm L1; p=2, norm L2).

The INN 640 and 650 are depicted as separate elements in the figure but this distinction is for the simplicity of drawing: the element 640 represents the INN used in forward pass while the element 650 represents the INN used in backward pass. In practice, only a single INN is used.

For the backward pass, the INN 650 is also conditioned by the wavelet subbands 628 of the decoded image. The input of the INN 650 for the backward pass is a set of wavelets following a normal distribution or a set of zeros wavelet subbands 651. The INN 650 generates reconstructed wavelet subbands 653 that are inversed transformed 660 to determine a reconstructed luminance. This reconstructed luminance is then combined 670 with the decoded chrominance to determine the output image. The INN is trained according to a backward pass loss $\mathcal{L}_{bwd}$ with the objective to reconstruct an improved image. It is based on a first backward loss $\mathcal{L}_{bwd}^1$ 682 to minimize the difference between the luminance reconstructed by the INN and the luminance of the input image:

$$\mathcal{L}_{bwd}^1(I, \hat{I}_{bwd}) = \frac{1}{N \times M} \sum_{(x,y)}^{N \times M} \left\| I(x,y) - \hat{I}_{bwd}(x,y) \right\|^2$$

and a second backward loss $\mathcal{L}_{bwd}^2$ 683 to minimize the difference between the reconstructed wavelet subbands and the wavelet subbands of the input image:

$$\mathcal{L}_{bwd}^2(Haar_I, \widetilde{Haar_I}) = \frac{1}{M \times N} \sum_{k=\{0,1,2,3\}} \sum_{(x,y)\in(\frac{N}{2},\frac{M}{2})} (\widetilde{Haar_I}(x,y,k) - Haar_I(x,y,k))^p$$

The final backward loss is equal to:

$$\mathcal{L}_{bwd} = \alpha_{bwd1} \times \mathcal{L}_{bwd}^1(I, \hat{I}_{bwd}) + \alpha_{bwd2} \times \mathcal{L}_{bwd}^2(Haar_I, \widetilde{Haar_I})$$

where the parameters $\alpha_{bwd1}$, $\alpha_{bwd2}$ are used to balance the different losses using different weights (i.e.; one weight per loss). In at least one embodiment, only the second backward loss $\alpha_{bwd2}$ is taken into account ($\alpha_{bwd1}$ = 0), thus only relying on the difference between the reconstructed wavelet subbands and the wavelet subbands of the input image. In at least one embodiment, only the first backward loss $\alpha_{bwd1}$ is taken into account ($\alpha_{bwd2}$ = 0), thus only relying on the difference between the luminance reconstructed by the INN 650 and the luminance of the input image. In at least one embodiment, $\alpha_{bwd1}$ = $\alpha_{bwd2}$ = 1 so that both backward losses are taken into account with the same impact.

The final loss is given by combining the forward and the backward loss:

$$\mathcal{L}_{\square} = \alpha_{fwd} \times \mathcal{L}_{fwd} + \alpha_{bwd} \times \mathcal{L}_{bwd}$$

Where the parameters $\alpha_{fwd}$, $\alpha_{bwd}$ are used to balance the forward and backward losses (or a single backward loss when $\alpha_{bwd1}$ or $\alpha_{bwd2}$ is equal to zero) using different weights (i.e.; one weight per loss). Values of 1 and 5 respectively may be selected respectively for the forward and backward losses. Other couple of values may be chosen allowing a different balance (such as 2 and 3 or 1 and 1).

Another type of loss functions, such as gradient-based loss functions for instance, may be used.

The training procedure consists in determining the parameters $\theta$ such that:

$$\hat{\theta} = argmin_\theta \, \mathcal{L}$$

in other words, the training procedure aims at minimizing the forward and backward losses and determines the parameters for the INN in forward (640) and backward (650) pass.

The training procedure is conventionally iterated over a set of images covering a huge variety of content. The parameters of the training are the following: Trained on patch size, by default $128 \times 128$, randomly extracted for a training image, batch size = 4, learning rate = $1 \times 10^{-4}$, data augmentation is performed randomly: Horizontal flip, vertical flip and rotation of 90°, the optimizer is ADAM one. Other parameters may be for the training leading to similar results. As a result of the training, the INN parameters are determined and can be integrated into a decoder to be operated in a backward pass in order to enhance the quality of decoded images.

A key ingredient of the proposed network is that it is conditioned by wavelet subbands of the decoded image. Such image is obviously available at the encoder and the decoder side therefore the reconstruction is only based on data already available on the decoder side without any side information.

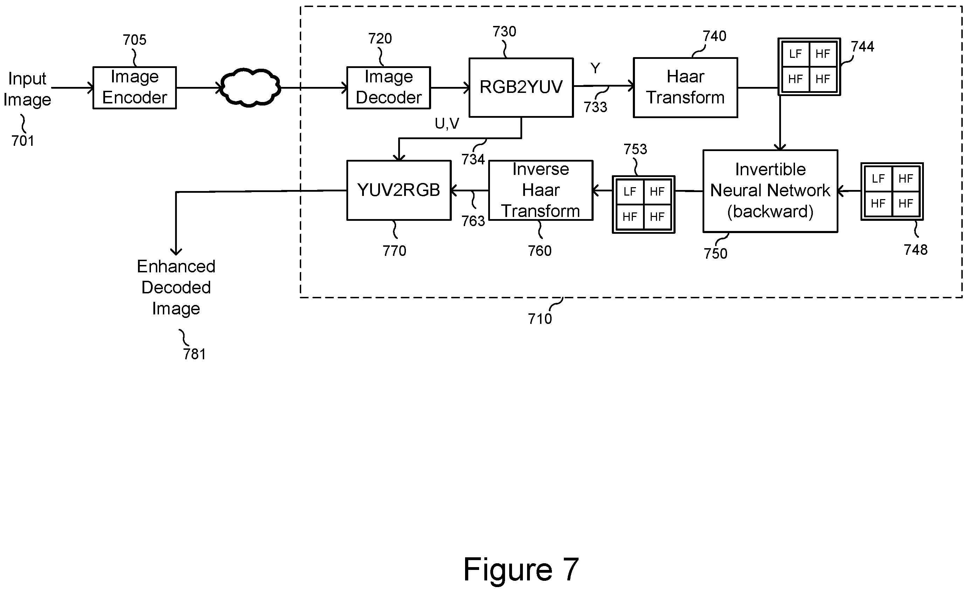

**Figure 7** illustrates an example of process for operating an invertible neural network based on wavelet transforms according to embodiments. It illustrates the inference mode and the way we can use the proposed method in a video encoding chain and more particularly how to use the inference mode to enhance a decoded image in a decoder such as the decoder 400 of figure 4). Compared to existing coding frameworks, the image encoder 705 is not changed: an input image 701 is encoded by an image encoder 705 and provided to a decoder 710. An INN 750 has been trained for the given vide or image coding system and this INN available to the decoder 710, i.e., for example integrated in the post-decoding processing module (485 of figure 4) of the decoder. The encoded image is first decoded by the image decoder 720 and luminance 733 and chrominance 734 are separated. The luminance is transformed in wavelet subbands 744 by a Haar transform 740. The INN 750 is conditioned by the wavelet subbands 744 and is run in backward pass from a set wavelet subbands following a normal distribution or a set of of zeros wavelet subbands 748 to reconstruct wavelet subbands 753 representing the input image. The final image is then reconstructed by applying the inverse of the Haar transform 760 to the wavelet subbands 753 and combining 770 the reconstructed luminance 763 with chrominance 734 of the input image to produce an enhanced decoded image 781.

As mentioned in figure 5C, the architecture of the INN relies on invertible blocks. In at least one embodiment, the invertible blocks of the INN used for training and inference as described with reference to figures 6 and 7 are based on coupling layers using single-side affine transform (element 599 of figure 5B). The number of coupling layers impacts the effectiveness of the image enhancement but also the complexity of the system. In at least one implementation providing good results, a set of 4 coupling layers is used. In any other number of coupling layers may be used, for example in a range between 3 and 8.

With reference to figure 5B, in the forward pass, the variable $a_2$ represents the wavelet subbands of the compressed image, whereas the variable $a_1$ represent the wavelet subbands of the original image. The signal represented by the variable $a_2$, which is known both from the encoder and the decoder is not altered. This signal is used to adapt and modify the signal variable $a_1$ which is only know at the encoder side (i.e. the original input image). In the backward pass, the variable $b_1$ represents wavelet subbands of the compressed image, whereas the variable $b_2$ represent wavelet subbands following a normal distribution or a set of wavelet subbands with zeros coefficients. The signal represented by the variable $b_2$, which is known both from the encoder and the decoder is not altered. This signal is used to adapt and modify the signal variable $b_1$ which is a set of wavelet coefficients of a known distribution.

The networks T and S, that compute the translation and scale values can be DenseBlock [Huang et al., 2017], ResidualDenseBlock [Zhang et al., 2018] or any convolutional neural network.

Experiments showed that the INR described herein allow to enhance a decoded image notably by bringing back some details in highly compressed areas and improving the quality of the main structures of the image. The method allows to improve the contrast of the reconstructed image, making the image less blurry.

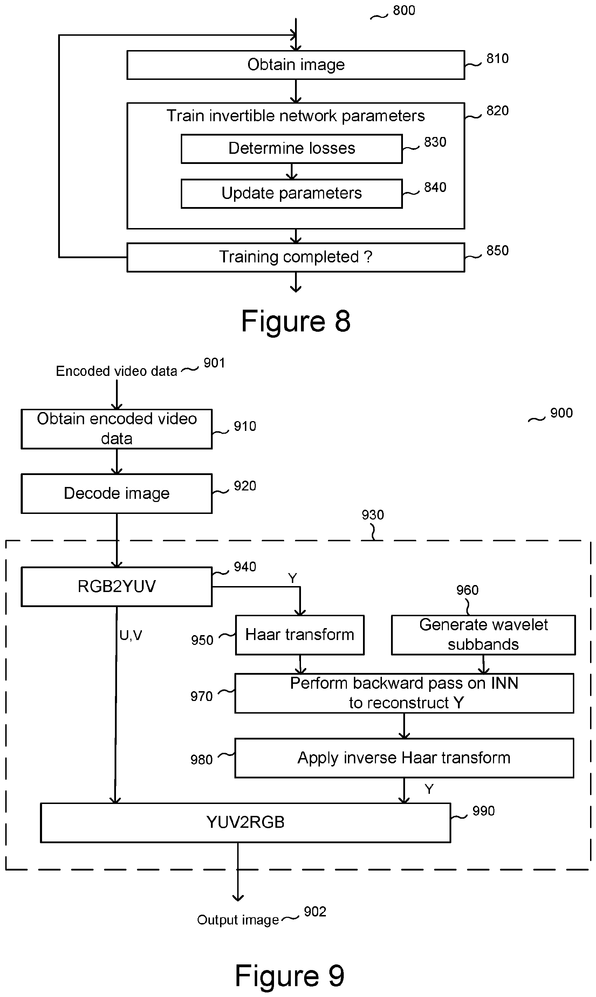

**Figure 8** illustrates an example of process for training invertible neural network using wavelet subbands according to embodiments. This process 800 may be implemented by a device such as the device 1000 of figure 1 and more particularly by an electronic circuitry such as the processor 1010. It is operated offline, as described with reference to the figure 6 and iterated over a set of images of sub-parts of images. In step 810, the processor obtains an image. In step 820, the processor starts the training of the INN for the obtained image. This training comprises, in step 830, determining the losses described above ( $\mathcal{L}_{fwd}$ and $\mathcal{L}_{bwd}$ ) and updating the parameters thanks to gradient backpropagation in step 840. In step 850, it is checked whether the training is completed. The training is completed after a pre-determined number of iterations (e.g. 10000) or when the loss value does not change anymore. When another iteration is required, the process starts again at step 810 with another image. When the training is completed, the parameters of the INN have been successfully determined and can be used in inference mode, for example in a decoder as described in the process of figure 9.

**Figure 9** illustrates an example of process for utilizing an invertible neural network using wavelet subbands for enhancing images according to embodiments. This process 900 may be implemented by a device such as the device 1000 of figure 1 or the decoder 400 of figure 4 and more particularly by an electronic circuitry such as the processor 1010 or the decoder 1030. Prior to this process, the INN is configured with the parameters trained using the training process 800 described with reference to figure 8 or any other training process leading to the determination of INN parameters for the video coding system that is used to encode the image. In step 910, the processor obtains the encoded video data (e.g., a bitstream or video file) and in step 920, conventionally decodes an image from the video data. The steps included in block 930 are related to the image enhancement process proposed herein. In step 940, the processor separates the luminance (Y) from the chrominance (U,V). In step 950, the process applies a transform (for example an Haar transform) to decompose the luminance into a set of wavelet subbands representing the luminance of the decoded image. In step 960, the processor generates a set of wavelet subbands following a normal distribution or having zero energy. In step 970, the processor performs a backward pass on the INN with the set of wavelet subbands following a normal distribution or having zero energy as input, the INN being conditioned by the set of wavelet subbands representing the luminance of the decoded image. The result of this backward pass is a set of wavelet subbands representing a reconstructed luminance. In step 980, the processor applies an inverse transform to the set of wavelet subbands representing the reconstructed luminance in order to recompose the reconstructed luminance. In step 990, the reconstructed luminance is combined with the chrominance of the decoded image to reconstruct an output image.

The application is described herein as operating on full size images. In at least one embodiment, the INN is trained to operate on smaller elements, for example patches, partitions or blocks of an image.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. Figures provide some embodiments, but other embodiments are contemplated and the discussion of these figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium (for example non-transitory) having stored thereon instructions for performing any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

Various methods and other aspects described in this application can be used to modify modules, for example, the motion compensation and motion estimation modules of a video encoder 300 and decoder 400 as respectively shown in figures 3 and 4.

Various numeric values are used in the present application, for example, 128 for the block size. The specific values are for example purposes and the aspects described are not limited to these specific values.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, adapting the illumination compensation process.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, tablets, smartphones, cell phones, portable/personal digital assistants, and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

In the present application, the terms "reconstructed" and "decoded" may be used interchangeably, the terms "pixel" and "sample" may be used interchangeably, the terms "image," "picture", "map", "frame", "slice" and "tiles" may be used interchangeably. Usually, but not necessarily, the term "reconstructed" is used at the encoder side while "decoded" is used at the decoder side. The term compressed represents the result of an encoding step followed by a decoding step.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an illumination compensation parameter. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types.

## Claims

1. A method comprising:

   - decoding an image from an obtained encoded video data,
   - separating the decoded image in luminance and chrominance,
   - decomposing the luminance of the decoded image by applying a transform to the luminance of the decoded image to determine a first set of wavelet subbands,
   - determining a second set of wavelet subbands by generating a set of wavelet subbands following a known distribution,
   - reconstructing a third set of wavelet subbands representing a reconstructed luminance by performing a backward pass on an invertible neural network having for input the second set of wavelet subbands and being conditioned by the first set of wavelet subbands,
   - determining the reconstructed luminance by applying an inverse transform to the third set of wavelet subbands,
   - combining the reconstructed luminance and the chrominance of the decoded image into an output image, and
   - providing the output image,

   wherein the invertible neural network is trained to minimize a set of losses.

2. The method of claim 1, wherein the set of losses comprises a forward loss for forcing a set of wavelet subbands reconstructed by the invertible neural network in a forward pass to follow a normal distribution with mean equal to 0 and variance equal to 1.

3. The method of claim 1, wherein the set of losses comprises a forward loss for minimizing energy of a set of wavelet subbands reconstructed by the invertible neural network in a forward pass.

4. The method of claim 2 or 3, wherein the set of losses further comprises a backward loss for minimizing a difference in a backward pass between the reconstructed luminance and a luminance of an input image to which the decoded image corresponds to, and wherein the impact of each loss is balanced using a weight.

5. The method of claim 2 or 3, wherein the set of losses further comprises a backward loss for minimizing a difference in a backward pass between the second set of wavelet subbands and wavelet subbands obtained by applying a transform to a luminance of an input image to which the decoded image corresponds to, and wherein the impact of each loss is balanced using a weight.

6. The method of claim 2 or 3, wherein the set of losses further comprises a first backward loss for minimizing a difference in a backward pass between the second set of wavelet subbands and wavelet subbands obtained by applying a transform to a luminance of an input image to which the decoded image corresponds to and a second backward loss for minimizing a difference in a backward pass between the reconstructed luminance and a luminance of an input image to which the decoded image corresponds to, and wherein the impact of each loss is balanced using a weight.

7. The method of any of claims 1 to 6, wherein the transform is an Haar transform and the inverse transform is an inverse Haar transform.

8. The method of claim 7, wherein the Haar and inverse Haar transforms use one level of decomposition to determine a set of four wavelet subbands.

9. A method for training an invertible neural network comprising, for a set of images: iterating until a pre-determined number of iterations occurred or until a loss value does not change anymore, and for each iteration:

- determining a set of losses based on the iterated image,
- updating the parameters by using gradient backpropagation,

wherein the set of losses comprise at least a forward loss for minimizing the energy of a set of wavelet subbands reconstructed by the invertible neural network in a forward pass, and a backward loss for minimizing the difference in a backward pass between the second set of wavelet subbands and wavelet subbands obtained by applying a transform to a luminance of an input image to which the decoded image corresponds to, and wherein the impact of each loss is balanced using a weight.

10. The method of claim 9, wherein the set of loss further comprises a second backward loss for minimizing the difference in a backward pass between the reconstructed luminance and the luminance of the input image.

11. An apparatus comprising:

- an image decoder configured to decode an image from an obtained encoded video data,
- one or more processor configured to:

- separate the decoded image in luminance and chrominance,
- decomposing the luminance of the decoded image by applying a transform to the luminance of the decoded image to determine a first set of wavelet subbands,
- determine a second set of wavelet subbands by generating a set of wavelet subbands following a known distribution,
- determine the reconstructed luminance by applying an inverse transform to a set of wavelet subbands provided by an invertible neural network,
- combining the reconstructed luminance and the chrominance of the decoded image into an output image, and
- providing the output image,

- an invertible neural network configured to reconstruct a third set of wavelet subbands representing a reconstructed luminance by performing a backward pass on an invertible neural network having for input the second set of wavelet subbands and being conditioned by the first set of wavelet subbands.

12. The apparatus of claim 11, wherein the set of losses comprises a forward loss for forcing a set of wavelet subbands reconstructed by the invertible neural network in a forward pass to follow a normal distribution with mean equal to 0 and variance equal to 1 or a forward loss for minimizing energy of a set of wavelet subbands reconstructed by the invertible neural network in a forward pass.

13. The apparatus of claim 12, wherein the set of losses further comprises a first backward loss for minimizing the difference in a backward pass between the second set of wavelet subbands and wavelet subbands obtained by applying a transform to a luminance of an input image to which the decoded image corresponds to and a second backward loss for minimizing the difference in a backward pass between the reconstructed luminance and a luminance of an input image to which the decoded image corresponds to, and wherein the impact of each loss is balanced using a weight.

14. A computer program comprising program code instructions for implementing the method according to any of claims 1 to 10 when executed by a processor.

15. A non-transitory computer readable medium storing program code instructions for implementing the method according to any of claims 1 to 10 when executed by a processor.

1000

| 1130 | 1010 | 1020 | 1070 | 1100 |
|------|------|------|------|------|

RF, COMP, USB, HDMI

Processor

Memory

Display → Display

1140

1080

Audio → Speakers
1110

Encoder/Decoder

Storage Device

Peripheral Interface → Peripherals
1120

1030

1040

1090

Communications Interface 1050

Communications Channel 1060

# Figure 1

200

| Provider | 220 | Receiver | 240 | Display |
|----------|-----|----------|-----|---------|
| 210 | | 230 | | 250 |

# Figure 2

300

Figure 3

400

| 430 | 435 | 440 | 450 |
|---|---|---|---|
| Entropy Decoding | Partitioning | Inverse Quantization | Inverse Transform |

455

470

460

Intra Prediction

Motion Compensation

475

480

Reference Picture Buffer

465

In-loop Filters

485

Post-decoding Processing

## Figure 4

Forward pass ─────────────────────────────→

Input Data → Deep Neural Network → Output Data (+ Latent variable if required)

Shared weights

Reconstructed Input Data ← Deep Neural Network ←

Backward pass
←─────────────────────────────

## Figure 5A

Figure 5B

Figure 5C

Figure 6

Figure 7

~ 800

Obtain image ~ 810

Train invertible network parameters ~ 820

Determine losses ~ 830

Update parameters ~ 840

Training completed ? ~ 850

# Figure 8

Encoded video data ~ 901

Obtain encoded video data ~ 910

Decode image ~ 920

930

RGB2YUV ~ 940

Y

960

Generate wavelet subbands

U,V

950 ~ Haar transform

970 ~ Perform backward pass on INN to reconstruct Y

980 ~ Apply inverse Haar transform

Y

YUV2RGB ~ 990

Output image ~ 902

# Figure 9

| | Europäisches Patentamt European Patent Office Office européen des brevets | **EUROPEAN SEARCH REPORT** | **Application Number** EP 24 30 6724 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNHUI LI ET AL: "Enhancing Perception Quality in Remote Sensing Image Compression via Invertible Neural Network", ARXIV.ORG, CORNELL UNIVERSITY LIBRARY, 201 OLIN LIBRARY CORNELL UNIVERSITY ITHACA, NY 14853, 25 August 2024 (2024-08-25), XP091853024, * abstract; figure 3 * * section III. * ----- | 1-15 | INV. H04N19/86 H04N19/63 |
| | | | **TECHNICAL FIELDS SEARCHED (IPC)** |
| | | | H04N |

The present search report has been drawn up for all claims

| Place of search | Date of completion of the search | Examiner |
|---|---|---|
| Munich | 13 March 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document